## Europäisches Patentamt
## European Patent Office
## Office européen des brevets

(19) 

(11) Veröffentlichungsnummer: **0 046 224**
**B1**

(12) # EUROPÄISCHE PATENTSCHRIFT

(45) Veröffentlichungstag der Patentschrift :
23.05.84

(51) Int. Cl.³ : **H 04 Q 3/66, H 04 M 3/50**

(21) Anmeldenummer : **81105977.3**

(22) Anmeldetag : **29.07.81**

(54) **Verfahren für zentral gesteuerte Fernmeldevermittlungsanlagen, insbesondere Fernsprechnebenstellenanlagen mit Vermittlungsplätzen unterschiedlicher Betriebsart.**

(30) Priorität : **19.08.80 DE 3031291**

(43) Veröffentlichungstag der Anmeldung :
**24.02.82 Patentblatt 82/08**

(45) Bekanntmachung des Hinweises auf die Patenterteilung : **23.05.84 Patentblatt 84/21**

(84) Benannte Vertragsstaaten :
**AT BE CH FR IT LI**

(56) Entgegenhaltungen :
**DE-A- 2 211 779**
**DE-A- 2 912 764**
**FR-A- 2 167 361**
**US-A- 4 145 578**

(73) Patentinhaber : **SIEMENS AKTIENGESELLSCHAFT Berlin und München Wittelsbacherplatz 2 D-8000 München 2 (DE)**

(72) Erfinder : **Ott, Gerhard, Dipl.-Ing. Espenweg 7 D-8011 Kirchheim (DE)**
Erfinder : **Karl, Michael-Wilhelm, Dipl.-Ing. Platanenstrasse 60 D-8028 Taufkirchen (DE)**

**Beschreibung**

Die Erfindung betrifft ein Verfahren für zentral gesteuerte Fernmeldeanlagen, insbesondere Fernsprechnebenstellenanlagen, mit mehreren Vermittlungsplätzen unterschiedlicher Betriebsarten, wobei jedem Vermittlungsplatz ein zentral angeordnet, den Zustand des Vermittlungsplatzes frei-besetzt enthaltender Speicherplatz in einem Zustandsspeicher zugeordnet ist und wobei unterschiedliche Anrufarten vorliegen.

Aus der DE-A1-2 912 764 (veröffentlicht 9.10.1980) ist ein Verfahren für eine zentral gesteuerte Fernsprechnebenstellenanlage bekannt, bei der eine Reihe von Vermittlungsplätzen vorgesehen ist, wobei die einzelnen Vermittlungsplätze für unterschiedliche Betriebsarten (z. B. nur Amtsverkehr ankommend, nur Meldeanrufe, nur Hinweisanrufe, nur anlageninterne Anrufe) ausgelegt sind. Dabei ist ein Zustandsspeicher vorgesehen, der den jeweiligen Zustand eines jeden Vermittlungsplatzes (beispielsweise frei, besetzt) angeben kann. Es soll nun davon ausgegangen werden, daß eine solche zentral gesteuerte Fernsprechnebenstellenanlage eine größere Anzahl (z. B. 40) von Vermittlungsplätzen enthält, denen unterschiedliche Betriebsarten zugeordnet sind, wobei die unterschiedlichsten Anrufarten vorliegen können.

Die Aufgabe der Erfindung soll darin bestehen, ein Verfahren zu finden, mit welchem es bei einer zentral gesteuerten Fernsprechnebenstellenanlage mit einer größeren Anzahl von Vermittlungsplätzen unterschiedlicher Betriebsart und bei ankommenden unterschiedlichen Anrufarten möglich ist, eine Anrufart sofort einem Vermittlungsplatz mit passender Betriebsart zuzuweisen.

Dies wird nach dem Gegenstand der Erfindung dadurch erreicht, daß die Vermittlungsplätze mit gleicher Betriebsart in Vermittlungsplatzgruppen zusammengefaßt sind, daß in einem Vermittlungsplatz-Listenspeicher für jede Vermittlungsplatzgruppe ein die Nummer des zuletzt belegten Vermittlungsplatzes enthaltender Speicherplatz vorgesehen ist, daß weiterhin für jede Vermittlungsplatzgruppe ein eigener, die Adresse der einzelnen zu der Gruppe gehörenden Vermittlungsplätze in einer festen Reihenfolge enthaltender Vermittlungsplatz-Gruppenspeicher vorgesehen ist und daß bei einem ankommenden Anruf in einem Zuordnungslistenspeicher entsprechend der Anrufart eine Vermittlungsplatzgruppe mit zu diesem Anruf passender Betriebsart zugeordnet wird und daß nach Auslesen der Nummer des zuletzt belegten Vermittlungsplatzes dieser Vermittlungsplatzgruppe aus dem Vermittlungsplatz-Gruppenspeicher ein freier Vermittlungsplatz dieser Gruppe mittels eines zyklisch ablaufenden Suchvorganges beginnend mit der nächstfolgenden Nummer ermittelt wird, wobei die Frei-Besetzt-Prüfung der Vermittlungsplätze jeweils mit Hilfe des Zustandsspeichers erfolgt.

Hieraus ergibt sich der Vorteil, daß der ankommende Anruf sofort einer passenden Vermittlungsplatzgruppe zugeordnet wird und daß innerhalb der jeweiligen Vermittlungsplatzgruppe eine ausreichende Anrufverteilung eingehalten wird.

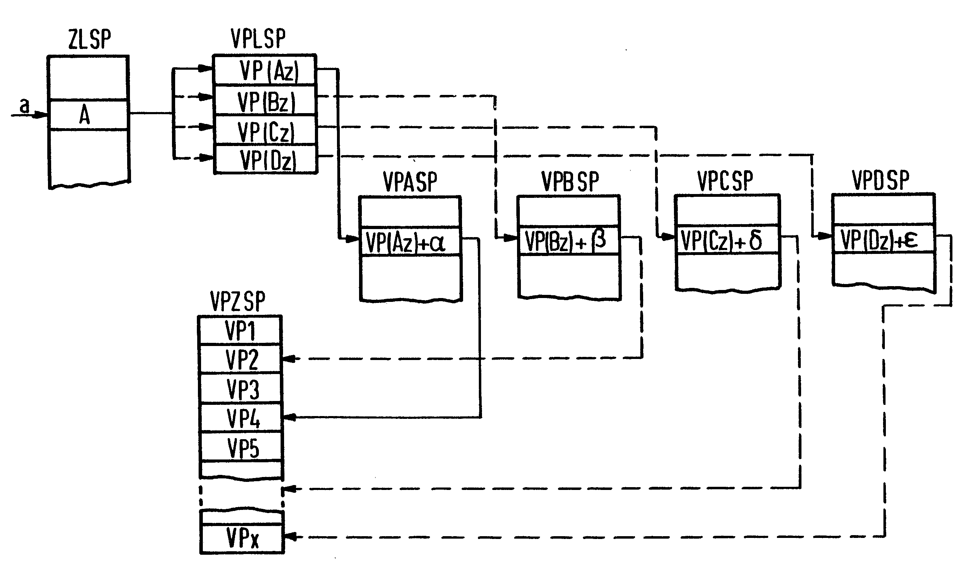

Das erfindungsgemäße Verfahren soll anhand einer Figur erläutert werden. Die Figur besteht im wesentlichen aus einem Zuordnungslistenspeicher ZLSP, aus einem Vermittlungsplatzlistenspeicher VPLSP mit den Speicherplätzen VP (Az), VP (Bz), VP (Cz), VP (Dz), den Vermittlungsplatzgruppenspeichern VPASP, VPBSP, VPCSP, VPDSP und einem Zustandsspeicher VPZSP.

Zur Erklärung des erfindungsgemäßen Verfahrens sei angenommen, daß an der Fernsprechnebenstellenanlage ein Gespräch der Gesprächsart a (z. B. nur Amtsverbindung) ankommend anliegt. Dieser Anruf gelangt in einen Zuordnungslistenspeicher ZLSP und soll zu einem Vermittlungsplatz weitergeleitet werden. An dieser Stelle wird zunächst festgestellt, zu welcher Anrufart der vorliegende Anruf gehört und welcher Vermittlungsplatz diesen Anruf entgegennehmen kann. Da in der Fernsprechnebenstellenanlage ca. 40 Vermittlungsplätze vorgesehen sind und beispielsweise vier unterschiedliche Betriebsarten der Vermittlungsplätze (z. B. A = nur Amtsverbindungen ankommend, B = nur Nebenstellenbetrieb, C = nur Meldebetrieb, D = jede Betriebsart) möglich sind, werden die Vermittlungsplätze in Gruppen mit gleicher Betriebsart zusammengefaßt. Dem anliegenden Anruf wird nun die Vermittlungsplatzgruppe mit der passenden Betriebsart und zwar die Vermittlungsplatzgruppe VPA zugeordnet (es könnte auch die Vermittlungsplatzgruppe VPD sein, da diese für sämtliche Anrufsarten belegbar ist).

Von dem Zuteilungslistenspeicher ZLSP wird ein Vermittlungsplatzlistenspeicher VPLSP angesteuert, in welchem für jede Vermittlungsplatzbetriebsartengruppe ein Speicherplatz vorgesehen ist [VP (Az), VP (Bz), VP (Cz), VP (Dz)]. In dem jeweiligen Speicherplatz des Vermittlungsplatzlistenspeichers VPLSP ist die Nummer des Vermittlungsplatzes abgespeichert, der innerhalb einer Betriebsartgruppe zuletzt belegt wurde. In dem Speicherplatz VP (Az) ist beispielsweise die Nummer des Vermittlungsplatzes der Betriebsartengruppe A gespeichert, der innerhalb dieser Betriebsartengruppe als letzter belegt wurde. Dabei wird davon ausgegangen, daß alle in der Fernsprechnebenstellenanlage vorgesehenen Vermittlungsplätze fortlaufend numeriert sind, wobei beispielsweise der Betriebsartengruppe A die Vermittlungsplätze VP1, VP3, VPy angehören können. Dabei ist zur Erklärung des Verfahrens die Nummerndifferenz zwischen einem Vermittlungsplatz einer Betriebsartengruppe zum nächsten Vermittlungsplatz in dieser gleichen Betriebsartengruppe bei der Betriebsartengruppe A mit $\alpha$, bei der

Betriebsartengruppe B mit β, bei der Betriebsartengruppe C mit δ und bei der Betriebsartengruppe D mit ε bezeichnet.

Von dem Vermittlungsplatz-Listenspeicher VPLSP besteht vom Speicherplatz VP (Az) ein Zugriff zum Vermittlungsplatzgruppenspeicher VPASP für die Betriebsgruppe A. Ein gleicher Zugriff besteht vom Speicherplatz VP (Bz) zum Vermittlungsplatzgruppenspeicher VPBSP, vom Speicherplatz VP (Cz) zum Vermittlungsplatzgruppenspeicher VPCSP und vom Speicherplatz VP (Dz) zum Vermittlungsplatzgruppenspeicher VPDSP.

In dem Vermittlungsplatzgruppenspeicher VPASP sind alle Adressen und Festdaten aller Vermittlungsplätze mit der Betriebsart A an fest zugeordneten Speicherplätzen abgespeichert. Da der anliegende Anruf a einem Vermittlungsplatz mit der Betriebsart A zugeordnet wurde und da im Vermittlungsplatz-Listenspeicher am Speicherplatz VP (Az) beispielsweise entsprechend der vorausgehenden Annahme der Vermittlungsplatz VP1 als letzter Vermittlungsplatz der Betriebsartengruppe A belegt wurde, wird jetzt dem Vermittlungsplatzgruppenspeicher VPASP der Speicherplatz VP (Az) + α, d. h. der Vermittlungsplatz der Betriebsartengruppe A mit der nächsthöheren Vermittlungsplatznummer angesteuert. Entsprechend der vorhergehenden Annahme wäre dies der Vermittlungsplatz VP3.

Das gleiche gilt für das Ansteuern eines Speicherplatzes in den Vermittlungsplatzgruppenspeichern VPBSP, VPCSP und VPDSP, wenn ein Vermittlungsplatz mit einer anderen Betriebsart notwendig ist.

Ist ein zugeordneter Speicherplatz im Vermittlungsplatzgruppenspeicher einer Betriebsartengruppe ausgewählt, dann erfolgt vom Vermittlungsplatzgruppenspeicher der Zugriff zu einem Vermittlungsplatzzustandsspeicher VPZSP, in dem an einem fest zugeordneten Speicherplatz (VP1 bis VPx) der momentane Zustand eines jeden Vermittlungsplatzes abgespeichert ist. An dieser Stelle erfolgt die Frei-Besetzt-Prüfung bzw. Belegbarkeitsprüfung eines Vermittlungsplatzes. Ergibt die Abfrage des Speicherplatzes eine negative Aussage, dann wird beispielsweise bei der Betriebsart A im Vermittlungsplatzgruppenspeicher VPAS ein Speicherplatz VP (Az) + 2 α angesteuert. Dieser Vorgang erfolgt so oft, bis ein belegbarer Vermittlungsplatz gefunden wurde. Ist ein Vermittlungsplatzgruppenspeicher durch fortlaufende Belegung der einzelnen Vermittlungsplätze durchlaufen, dann beginnt die Belegung der einzelnen Vermittlungsplätze wieder mit dem Vermittlungsplatz mit der kleinsten Nummer.

Aus dem Vorstehenden geht hervor, daß es nach dem erfindungsgemäßen Verfahren in einfachster Weise möglich ist, bei zentral gesteuerten Fernmeldeanlagen insbesondere Fernsprechnebenstellenanlagen Anrufe mit unterschiedlicher Anrufart bei Vorliegen von Vermittlungsplätzen mit unterschiedlicher Betriebsart sofort einer passenden Vermittlungsplatzgruppe zuzuordnen, wobei im besonderen Falle eine Vermittlungsplatzgruppe auch aus einem Vermittlungsplatz bestehen kann und es ist in einfacher Weise möglich, innerhalb der einzelnen Vermittlungsplatzgruppen eine Anrufverteilung einzuhalten.

## Anspruch

Verfahren für zentral gesteuerte Fernmeldeanlagen, insbesondere Fernsprechnebenstellenanlagen, mit mehreren Vermittlungsplätzen unterschiedlicher Betriebsarten, wobei jedem Vermittlungsplatz ein zentral angeordnet, den Zustand des Vermittlungsplatzes frei-besetzt enthaltender Speicherplatz VP1-VPX in einem Zustandsspeicher VPZSP zugeordnet ist und wobei unterschiedliche Anrufarten vorliegen, dadurch gekennzeichnet, daß die Vermittlungsplätze mit gleicher Betriebsart in Vermittlungsplatzgruppen (A, B, C, D) zusammengefaßt sind, daß in einem Vermittlungsplatz-Listenspeicher (VPLSP) für jede Vermittlungsplatzgruppe ein die Nummer des zuletzt belegten Vermittlungsplatzes enthaltender Speicherplatz (VP (Az), VP (Bz), VP (Cz), VP (Dz)) vorgesehen ist, daß weiterhin für jede Vermittlungsplatzgruppe ein eigener, die Adresse der einzelnen zu der Gruppe gehörenden Vermittlungsplätze in einer festen Reihenfolge enthaltender Vermittlungsplatz-Gruppenspeicher (VPASP, VPBSP, VPCSP, VPDSP) vorgesehen ist und daß bei einem ankommenden Anruf (a) in einem Zuordnungslistenspeicher (ZLSP) entsprechend der Anrufart (a) eine Vermittlungsplatzgruppe mit zu diesem Anruf passender Betriebsart (A, B, C, D) zugeordnet wird und daß nach Auslesen der Nummer des zuletzt belegten Vermittlungsplatzes dieser Vermittlungsplatzgruppe aus dem Vermittlungsplatz-Gruppenspeicher (z. B. VPASP) ein freier Vermittlungsplatz dieser Gruppe mittels eines zyklisch ablaufenden Suchvorganges beginnend mit der nächstfolgenden Nummer (VP (Az) + α) ermittelt wird, wobei die Frei-Besetzt-Prüfung der Vermittlungsplätze jeweils mit Hilfe des Zustandsspeichers VPZSP erfolgt.

## Claim

Method for centrally controlled telecommunications systems, in particular private branch exchanges, having a plurality of exchange stations in different operating modes, where each exchange station is assigned a centrally arranged storage location (VP1-VPX), which contains the free-engaged state of the exchange station, in a state store (VPZSP), and where different call types are present, characterised in that the exchange stations having the same operating mode are combined in exchange station groups (A, B, C, D), that in an exchange station list store (VPLSP), a storage location (VP (Az), VP (Bz), VP (Cz), VP (Dz)), containing the number of the last seized exchange station, is arranged for each exchange station group, that furthermore for each exchange station group, there is provided a separate exchange station group store (VPASP, VPBSP, VPCSP, VPDSP) which contains the address of the individual exchange stations assigned to the group, in a fixed sequence, and that in the event of an incoming call (a), in an allocation list store (ZLSP) an exchange station group having the operating mode (A, B, C, D), which matches this call, is allocated in accordance with the call type (a), and that following the read-out from the exchange station group store (e. g. VPASP), of the number of the last seized exchange station of this exchange station group, a free exchange station of this group is ascertained by means of a cyclically executed search operation starting with the following number (VP (Az) + $\alpha$), the free-engaged test of the exchange stations being respectively effected with the aid of the state store (VPZSP).

## Revendication

Procédé pour des installations de télécommunication à commande centralisée, notamment des installations téléphoniques privées à postes supplémentaires, comportant plusieurs postes d'opérateurs présentant des types de fonctionnement différents, cependant qu'à chaque poste d'opérateur est associé un emplacement de mémoire (VP1-VPX), qui contient l'état du poste d'opérateur, libre-occupé, en étant disposé centralement, dans une mémoire d'états (VPZSP), et cependant qu'il se présente différents types d'appel, caractérisé par le fait que les postes d'opérateurs présentant le même type de fonctionnement sont réunis en groupes de postes d'opérateurs (A, B, C, D), qu'il est prévu dans une mémoire (VPLSP) de liste de postes d'opérateurs, pour chaque groupe de postes d'opérateurs, un emplacement de mémoire (VP (Az), VP (Bz), VP (Cz), VP (Dz)) contenant le numéro du poste d'opérateur occupé en dernier, qu'en outre pour chaque groupe de postes d'opérateurs il est prévu une mémoire propre (VPASP, VPBSP, VPCSP, VPDSP) de groupe de postes d'opérateurs contenant, suivant une séquence déterminée, l'adresse des postes d'opérateurs individuels appartenant au groupe, et que dans le cas d'un appel qui arrive (a), dans une mémoire (ZLSP) de liste d'association, en correspondance avec le type d'appel (a), un groupe de postes d'opérateurs est associé au type de fonctionnement (A, B, C, D) adapté à cet appel, et qu'après lecture du numéro du poste d'opérateur occupé en dernier de ce groupe de postes d'opérateurs à partir de la mémoire (par exemple VPASP) de groupe de postes d'opérateurs, un poste d'opérateur libre de ce groupe est déterminé au moyen d'un processus de recherche se déroulant cycliquement en commençant par le numéro immédiatement suivant (VP (Az) + $\alpha$), cependant que le contrôle libre-occupé des postes d'opérateurs a respectivement lieu à l'aide de la mémoire d'états (VPZSP).

ZLSP

VPLSP
| VP (Az) |
| VP (Bz) |
| VP (Cz) |
| VP (Dz) |

A

a →

VPASP
VP(Az)+α

VPBSP
VP(Bz)+β

VPCSP
VP(Cz)+δ

VPDSP
VP(Dz)+ε

VPZSP
| VP1 |
| VP2 |
| VP3 |
| VP4 |
| VP5 |

VPx

0 046 224